## Europäisches Patentamt
## European Patent Office
## Office européen des brevets

(19)

(11) Numéro de publication : **0 209 458**
**B1**

(12) **FASCICULE DE BREVET EUROPÉEN**

(45) Date de publication du fascicule du brevet :
**20.09.89**

(51) Int. Cl.⁴ : **G 01 F 23/24**

(21) Numéro de dépôt : **86401554.0**

(22) Date de dépôt : **11.07.86**

(54) Capteur de niveau de liquide électriquement isolant.

(30) Priorité : **15.07.85 FR 8510810**

(43) Date de publication de la demande :
**21.01.87 Bulletin 87/04**

(45) Mention de la délivrance du brevet :
**20.09.89 Bulletin 89/38**

(84) Etats contractants désignés :
**DE FR GB IT**

(56) Documents cités :
**EP—A— 0 043 312**
**EP—A— 0 433 122**

(73) Titulaire : **JAEGER**
**2, rue Baudin**
**F-92303 Levallois-Perret (FR)**

(72) Inventeur : **Eynard, Henri**
**62, rue Lafayette**
**F-75009 Paris (FR)**

(74) Mandataire : **Martin, Jean-Jacques et al**
**Cabinet REGIMBEAU 26, Avenue Kléber**
**F-75116 Paris (FR)**

Jouve, 18, rue St-Denis, 75001 Paris, France

## Description

La présente invention concerne un capteur de niveau de liquide électriquement isolant, plus particulièrement destiné au contrôle du niveau d'huile dans les carters de moteurs ou de boîtes de vitesses de véhicules automobiles.

Les capteurs existants comprennent un boîtier allongé, fixé sensiblement verticalement dans le carter contenant le liquide, présentant des ouvertures supérieure et inférieure, et dans lequel est disposé longitudinalement un fil résistif thermosensible dont les extrémités sont raccordées électriquement à un circuit d'alimentation et de traitement permettant à tout moment un contrôle du niveau de liquide.

Un exemple de circuit d'alimentation et de traitement convenant bien pour le contrôle de niveau d'huile est illustré dans le brevet français Nº 2 367 276. De façon générale, on applique un échelon de courant pendant une durée prédéterminée (par exemple 2s. environ), et on effectue par exemple deux mesures de la tension aux extrémités du fil résistif, au début et à la fin de cette durée ; leur différence $\Delta U$ est comparée à un seuil $\Delta U_0$ prédéterminé, de façon à déclencher une alarme logique au franchissement dudit seuil, ou fournir une sortie analogique fonction de $\Delta U$.

Ces capteurs utilisent un fil résistif thermosensible en V ou W, de façon à disposer d'une longueur importante dans un boîtier dont l'encombrement doit rester modeste. Il y a cependant une limite inférieure dans la miniaturisation du capteur, en raison des phénomènes de capillarité dont l'effet est de laisser subsister une certaine quantité de liquide autour du fil, en particulier à la pointe centrale du V ou du W qui est voisine du niveau bas extrême, ce qui fausse naturellement la mesure.

Dans l'application préférentielle de l'invention, qui est le contrôle du niveau d'huile pour le moteur ou la boîte de vitesses de véhicules automobiles, un autre facteur venant perturber les mesures est la présence des inévitables vibrations du carter de liquide. De ce fait, les oscillations des branches du fil résistif thermosensible diminuent la précision des mesures en accentuant l'effet de la capillarité au niveau des pointes centrales du V ou du W, et de plus provoquent une usure du fil pouvant entraîner une rupture de celui-ci.

Pour pallier cet inconvénient, il a été tenté d'utiliser des ressorts longitudinaux dans le prolongement du fil pour en augmenter la tension, mais ceci avait pour conséquence d'augmenter l'encombrement du capteur ; un tel capteur est par exemple décrit dans la demande de brevet européen Nº 0 043 312.

L'invention a pour objet de proposer un capteur de niveau de liquide robuste et fiable, moins sensible aux perturbations que les capteurs existants, en particulier ayant une meilleure tenue aux vibrations.

Un autre objet de l'invention est de rendre possible une réalisation particulièrement compacte du capteur sans que ce soit au détriment de la précision des mesures, ce qui peut permettre de disposer dans le boîtier du capteur un autre organe fonctionnel, tel qu'une thermistance par exemple.

Il s'agit plus particulièrement d'un capteur de niveau de liquide électriquement isolant, comportant un boîtier allongé fixé sensiblement verticalement dans un carter contenant le liquide, présentant des ouvertures supérieure et inférieure, et dans lequel est disposé longitudinalement un fil résistif thermosensible en forme de V dont les extrémités, situées dans la partie supérieure du boîtier, sont raccordées électriquement à un circuit d'alimentation et de traitement permettant à tout moment un contrôle du niveau de liquide dans le carter, caractérisé par le fait qu'il comporte des moyens de positionnement du fil thermosensible assurant un écartement essentiellement constant des deux branches sur la plus grande partie de celui-ci, et d'autre part une position stable du plan défini par le fil par rapport au boîtier allongé, les moyens de positionnement comprenant, en partie supérieure, des fentes latérales recevant un organe de connexion associé à chaque branche du fil thermosensible et dont la partie centrale assure la liaison électrique de l'extrémité correspondante dudit fil, et en partie inférieure une colonne transversale solidaire du boîtier, qui assure d'une part l'écartement désiré des deux branches du fil et d'autre part le support d'un organe d'accrochage élastique de la pointe en V disposé en arrière de ladite colonne.

En vue d'une réalisation particulièrement robuste et compacte, l'organe d'accrochage élastique comporte une branche centrale autour de laquelle passe la pointe du V, et deux branches d'extrémité disposées respectivement au voisinage de la base et de l'extrémité de la colonne ; avantageusement, une branche d'extrémité de l'organe d'accrochage élastique est traversée par la colonne au voisinage de l'extrémité de celle-ci, tandis que l'autre branche d'extrémité est maintenue en butée contre la base de la colonne, entre deux parois adjacentes prévues en arrière de ladite colonne, et le rebord des parois prévues en arrière de la colonne sert d'appui pour la portion du fil située entre la pointe du V et la zone en contact avec ladite colonne.

Il est intéressant de pouvoir aisément adapter le capteur de l'invention à un environnement différent : à cet effet, chacun des organes de connexion se prolonge latéralement par une patte recourbée permettant la fixation d'une résistance d'étalonnage ainsi montée en parallèle sur le fil résistif thermosensible.

Lorsque le boîtier est formé en deux demi-coquilles, il est avantageux que la colonne saille d'une demi-coquille, l'extrémité de ladite colonne étant reçue dans un logement correspondant de l'autre demi-coquille ; le maintien de l'organe élastique d'accrochage sera encore amélioré si la colonne présente un épaulement contre lequel est maintenue la branche d'extrémité correspondante dudit organe par appui de la paroi adjacente du boîtier.

Il est particulièrement intéressant, grâce au faible encombrement longitudinal obtenu, de prévoir que le boîtier présente, en arrière de la colonne, un logement inférieur pouvant recevoir une thermistance ; il est alors avantageux que les fils de connexion électrique du fil résistif thermosensible et de la thermistance sortent du boîtier en partie supérieure de celui-ci.

D'autres caractéristiques et avantages de l'invention apparaîtront plus clairement à la lumière de la description qui va suivre et des dessins annexés, illustrant un mode de réalisation préférentiel, en référence aux figures, où :

la figure 1 est une coupe longitudinale d'un capteur de niveau de liquide conforme à l'invention ;

la figure 2 est une vue en plan du capteur précédent, dont une demi-coquille formant couvercle a été enlevée conformément à la ligne II-II de la figure 1 ;

la figure 3 est une vue partielle à échelle agrandie, de l'extrémité inférieure de la demi-coquille de la figure 2, représentée sans les éléments rapportés ;

les figures 4 et 5 sont des coupes de la figure 3, respectivement selon IV-IV et V-V ;

les figures 6 et 7 sont des vues en plan et de dessus du fil résistif thermosensible et des organes de connexion associés ;

les figures 8 et 9 sont des vues, à une échelle agrandie, illustrant la structure particulière de l'organe d'accrochage élastique.

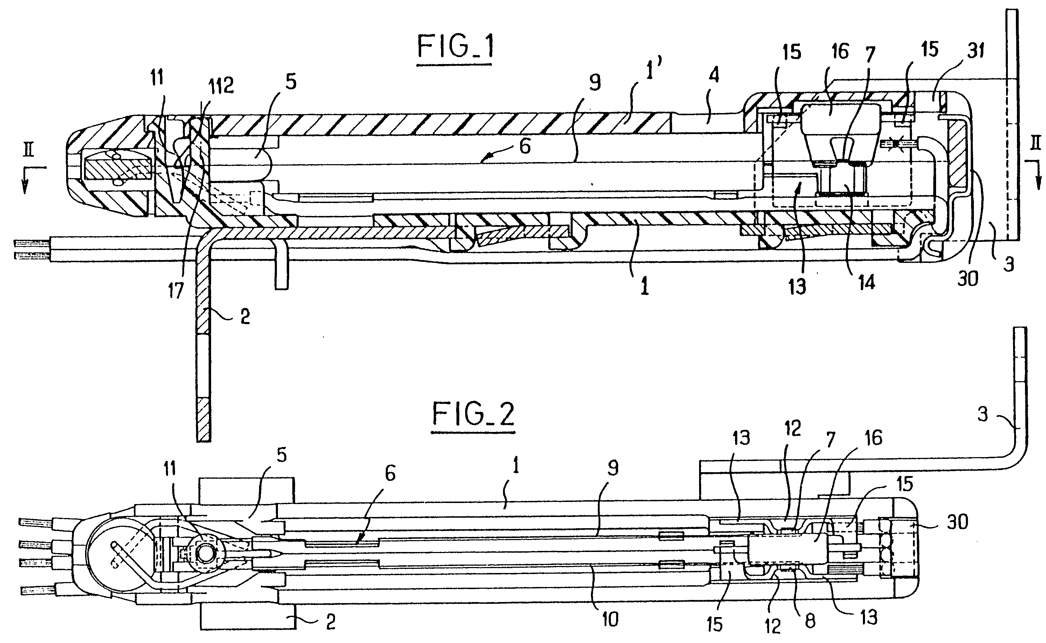

Aux figures 1 et 2, est illustré un capteur de niveau de liquide électriquement isolant conforme à l'invention, selon un mode de réalisation particulièrement avantageux pour le contrôle du niveau d'huile dans les carters de moteurs ou de boîtes de vitesses de véhicules automobiles.

Ce capteur comporte un boîtier allongé formé de deux demi-coquilles 1, 1', ici assemblées entre elles par clipsage et agrafage. Ce boîtier est fixé au moyen de platines 2, 3 dans un carter d'huile (non représenté), de façon à occuper une position essentiellement verticale (platine 3 vers le haut). De façon connue en soi, les deux demi-coquilles du boîtier définissent des ouvertures supérieure 4 et inférieure 5 permettant un libre accès à l'huile et à l'air à l'intérieur du boîtier.

A l'intérieur du boîtier, est disposé longitudinalement un fil résistif thermosensible 6, ici en forme de V, dont les extrémités 7, 8, situées dans la partie supérieure du boîtier, sont raccordées électriquement à un circuit d'alimentation et de traitement (non représenté) permettant un contrôle du niveau de liquide dans le carter à tout moment.

Conformément à un aspect essentiel de l'invention, le capteur de niveau de liquide comporte des moyens de positionnement du fil thermosensible 6 assurant un écartement essentiellement constant des deux branches 9, 10 sur la plus grande partie de celui-ci, et d'autre part une position stable du plan défini par le fil par rapport au boîtier allongé (ici ce plan est essentiellement contenu dans le plan de joint des deux demi-coquilles). Il est en outre prévu un élément essentiel de la structure du capteur de l'invention consistant en un organe d'accrochage élastique 11 de la pointe 112 du V formé par le fil 6 en appui sur certains desdits moyens de positionnement adjacents à ladite pointe, ainsi que cela va être expliqué.

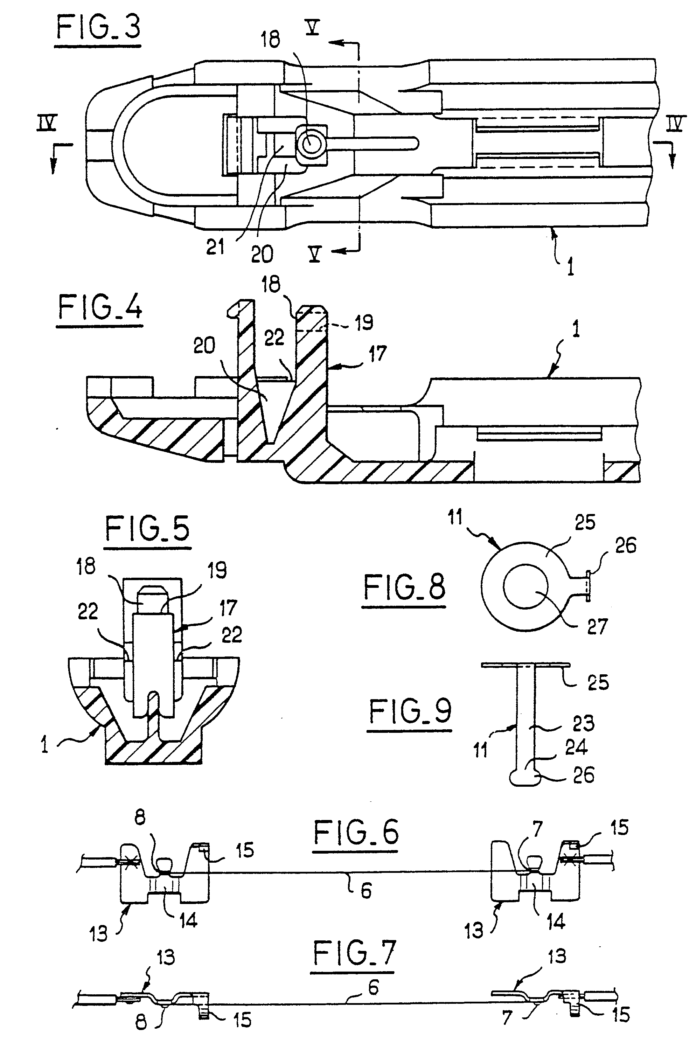

Le mode de réalisation illustré aux figures 1 et 2 concernant la structure des moyens de positionnement du fil résistif thermosensible est particulièrement avantageux pour obtenir un capteur de faible encombrement et ayant une bonne tenue aux vibrations. Il est ainsi prévu, en partie supérieure, des fentes latérales 12 recevant un organe de connexion 13 associé à chaque branche du fil thermosensible 6. La forme particulière des organes de connexion 13 ainsi que l'accrochage sur lesdits organes des extrémités 7, 8 du fil apparaissent plus clairement aux figures 6 et 7. Chaque extrémité du fil est ainsi soudée sur une partie centrale 14 des organes de connexion, lesdites parties centrales, une fois les organes de connexion disposés dans les fentes associées, définissent avec précision l'écartement des extrémités du fil (figure 2). En outre, chaque organe de connexion 13 présente une patte repliée 15 permettant la fixation par soudure d'une résistance d'étalonnage ainsi montée en parallèle sur le fil résistif thermosensible. Cette résistance 16 est un shunt présélectionné à la fabrication, permettant de dériver quelques pourcents du courant, ledit shunt ayant un coefficient de température beaucoup plus faible que celui du fil thermosensible. A titre indicatif, on utilise pour le fil résistif thermosensible un fil de chrome-nickel de 50 à 100 $\mu$m de diamètre et dont la résistance est de quelques ohms, la résistance du shunt d'étalonnage étant quant à elle de l'ordre de 200 à 2 000 $\Omega$ (les valeurs de ces résistances sont indiquées à froid ou à l'ambiante). Il est à noter que la disposition imbriquée des deux organes de connexion 13 permet d'utiliser la même pièce, ce qui simplifie les problèmes de stockage, et que les extrémités du fil sont soudées du même côté des parties centrales 14, ce qui est favorable en permettant l'utilisation d'un soudage automatique.

Conformément à un aspect essentiel de l'invention, il est prévu, en partie inférieure du capteur, une colonne transversale 17 qui assure d'une part l'écartement désiré des deux branches, et d'autre part le support de l'organe d'accrochage élastique 11 disposé en arrière de ladite colonne. Les figures 3 à 5, illustrant à une échelle agrandie l'extrémité inférieure correspondante de la demi-coquille 1 du boîtier, permettent de comprendre plus aisément la structure particulière de ces moyens de positionnement du fil ainsi que leur coopération avec l'organe d'accrochage élastique dont la structure propre sera mieux comprise en se reportant aux figures 8 et 9.

La colonne 17 est ainsi terminée par un téton supérieur 18 de forme cylindrique, de sorte qu'un épaulement 19 soit défini à la base dudit téton. En arrière de la colonne 17, c'est-à-dire en direction de l'extrémité de la demi-coquille 1, il est prévu deux parois 20 définissant entre elles un logement 21 pour recevoir une extrémité de l'organe d'accrochage élastique 11 ; de plus, le bord des parois 20 peut servir d'appui pour la portion du fil 6 située entre la pointe du V et la zone dudit fil en contact avec la colonne 17 (ces bords 22, référencés aux figures 4 et 5, sont en effet dans le plan défini par le fil résistif en position montée du capteur).

L'organe d'accrochage élastique 11 comporte une branche centrale 23 autour de laquelle passe la pointe du V formée par le fil résistif, et deux branches d'extrémité 24, 25 disposées respectivement au voisinage de la base et de l'extrémité de la colonne 17. La branche d'extrémité 24 se termine ainsi par une patte 26 dont la largeur correspond sensiblement à la distance séparant les deux parois 20. L'autre branche d'extrémité 25 a quant à elle une forme de rondelle dont l'ouverture centrale 27 permet d'enfiler l'organe d'accrochage élastique sur le téton 18 de la colonne, et est en appui contre l'épaulement 19. Ainsi qu'illustré à la figure 1, la demi-coquille 1' formant couvercle présente un évidement pouvant recevoir le téton 18 de la colonne 17 et permettant un appui constant et fiable de la branche d'extrémité 25 de l'organe élastique, de sorte que celui-ci est à tout moment parfaitement maintenu en position, indépendamment des vibrations du carter.

Il va de soi que le capteur de niveau de liquide de l'invention pourrait comporter un fil résistif thermosensible en forme de W ; il suffirait alors en effet de prévoir trois colonnes analogues à la colonne 17 pour le passage des pointes du fil, la liaison électrique des extrémités du W étant quant à elle assurée au moyen d'organes de connexion analogues à ceux qui ont été décrits.

Ainsi, grâce à la structure des moyens de positionnement qui ont été décrits et de l'organe d'accrochage élastique de la pointe du V, l'écartement des deux branches du fil thermosensible est essentiellement constant sur la plus grande partie de celui-ci, c'est-à-dire des extrémités dudit fil jusqu'à la zone de contact de la colonne 17 ce qui évite au mieux la formation de ménisques importants dus aux phénomènes de capillarité, ces phénomènes étant particulièrement sensibles dans une zone de pointe. De plus, on est assuré d'avoir une position stable du plan défini par le fil dans son boîtier, ceci étant en particulier dû à l'action de l'organe d'accrochage élastique parfaitement positionné par rapport au boîtier, et à l'appui prévu pour la portion du fil située entre la pointe V et la zone de contact avec la colonne 17.

La structure du capteur qui vient d'être décrite permet ainsi une réalisation d'encombrement particulièrement faible. Il est alors intéressant d'utiliser cette longueur réduite du boîtier à performances égales, en prévoyant, en arrière de la colonne 17, un logement inférieur pouvant recevoir une thermistance. De telles thermistances sont largement utilisées comme capteurs de température de liquide électriquement isolant, et leur fiabilité dans le domaine automobile n'est plus à démontrer. Ceci est particulièrement intéressant lorsque la nécessité s'impose de contrôler simultanément le niveau et la température d'un liquide, ceci pouvant être réalisé dans le cadre de l'invention au moyen d'un capteur combiné formant un appareil unique, ce qui permet de ne percer qu'un seul trou dans le carter d'huile, de réduire le coût du montage, et de ne nécessiter qu'un câble unique de liaison entre le boîtier et les organes de traitement du signal. Il est naturellement avantageux de prévoir une sortie unique, ici en partie supérieure du boîtier, pour les différents fils de connexion du fil résistif thermosensible et de la thermistance, ainsi qu'illustré à la figure 1. Il est avantageusement prévu une agrafe 30 se montant à la façon d'une charnière, qui permet à la fois la solidarisation des parties supérieures des deux demi-coquilles et le maintien en position des fils de connexion ; une extrémité de ladite agrafe est retenue au voisinage d'une ouverture 31 ménagée dans la demi-coquille 1' (simple ouverture de sécurité prévue en cas de dépassement du niveau maxi d'huile), tandis que l'autre extrémité formant charnière assure la tenue des fils de sortie dans toutes les directions de traction desdits fils.

## Revendications

1. Capteur de niveau de liquide électriquement isolant, comportant un boîtier allongé fixé sensiblement verticalement dans un carter contenant le liquide, présentant des ouvertures supérieure et inférieure, et dans lequel est disposé longitudinalement un fil résistif thermosensible en forme de V dont les extrémités, situées dans la partie supérieure du boîtier, sont raccordées électriquement à un circuit d'alimentation et de traitement permettant à tout moment un contrôle du niveau de liquide dans le carter, ce capteur comportant des moyens de positionnement du fil thermosensible (6) assurant d'une part un écartement essentiellement constant des deux branches sur la plus grande partie de celui-ci, et d'autre part une position stable du plan défini par le fil par rapport au boîtier allongé, les moyens de positionnement comprenant, en partie supérieure, des fentes latérales (12) recevant un organe de connexion (13) associé à chaque branche du fil thermosensible, et dont la partie centrale (14) assure la liaison électrique de l'extrémité correspondante dudit fil, et en partie inférieure une colonne transversale (17) solidaire du boîtier, qui assure d'une part l'écartement désiré des deux branches du fil et d'autre part le support d'un organe d'accrochage élastique (11) de la pointe en V disposé en arrière de ladite colonne vers le bas du boîtier.

2. Capteur selon la revendication 1, caractérisé par le fait que l'organe d'accrochage élastique (11) comporte une branche centrale (23) autour de laquelle passe la pointe du V, et deux branches d'extrémité (24, 25) disposées respectivement au voisinage de la base et de l'extrémité de la colonne (17).

3. Capteur selon la revendication 2, caractérisé par le fait qu'une branche d'extrémité (25) de l'organe d'accrochage élastique est traversée par la colonne (17) au voisinage de l'extrémité de celle-ci, tandis que l'autre branche d'extrémité (24) est maintenue en butée contre la base de la colonne, entre deux parois adjacentes (20) prévues en arrière de ladite colonne.

4. Capteur selon la revendication 3, caractérisé par le fait que le rebord (22) des parois prévues en arrière de la colonne (17) sert d'appui pour la portion du fil située entre la pointe en V et la zone en contact avec ladite colonne.

5. Capteur selon l'une des revendications 1 à 4, caractérisé par le fait que chacun des organes de connexion (13) se prolonge latéralement par une patte recourbée (15) permettant la fixation d'une résistance d'étalonnage (16) ainsi montée en parallèle sur le fil résistif thermosensible (6).

6. Capteur selon l'une des revendications 1 à 5, dans lequel le boîtier est formé de deux demi-coquilles, caractérisé par le fait que la colonne (17) saille d'une demi-coquille (1), et l'extrémité de ladite colonne est reçue dans un logement correspondant de l'autre demi-coquille (1').

7. Capteur selon la revendication 6, caractérisé par le fait que la colonne (17) présente un épaulement (19) contre lequel est maintenue la branche d'extrémité correspondante de l'organe élastique d'accrochage (11) par la paroi du boîtier adjacent au logement de ladite colonne.

8. Capteur selon l'une des revendications 1 à 7, caractérisé par le fait que le boîtier présente, en arrière de la colonne, un logement inférieur pouvant recevoir une thermistance.

9. Capteur selon la revendication 8, caractérisé par le fait que les fils de connexion électrique du fil résistif thermosensible (6) et de la thermistance sortent du boîtier en partie supérieure de celui-ci.

## Claims

1. A sensor for sensing the level of an electrically insulating liquid, the sensor comprising an elongate housing fixed substantially vertically in a casing containing the liquid whose level is to be sensed, said housing having a top opening and a bottom opening and containing a longitudinally extending heat sensitive V-shaped wire having its ends situated at the top of the housing, said ends being electrically connected to a feeder and processor circuit for monitoring the level of liquid in the casing at any moment, the sensor including means for positioning the heat sensitive wire (6) to ensure a substantially constant gap between the two branches thereof over a major portion of their length, and also to ensure that the plane defined by the wire has a position which is stable relative to the elongate housing, said positioning means comprising, at the top, side slots (12) receiving respective connection members (13) associated with each branch of the heat sensitive wire and including respective center portions (14) for providing said electrical connections to the corresponding ends of said wire, and, at the bottom, a transverse column (17) fixed to the housing, said column ensuring both the desired separation between the two branches of the wire and support for a relisient fastening member (11) for fastening to the point of the V-shape and disposed behind said column at the bottom of the housing.

2. A sensor according to claim 1, characterized in that the resilient fastening member (11) comprises a central branch (23) having the point of the V-shape passing thereover, together with two end branches (24, 25) disposed respectively in the vicinity of a base end and of the opposite end of the column (17).

3. A sensor according to claim 2, characterized in that one (25) of the end branches of the resilient fastening member has a portion of the column (17) close to said opposing end of the column passing therethrough, whereas the other end branch (24) of the resilient fastening member is held in abutment against the base end of the column between two adjacent walls (20) provided to the rear of said column.

4. A sensor according to claim 3, characterized in that the rims (22) of the walls provided to the rear of the column (17) serve as a bearing surface for that portion of the heat sensitive wire which is situated between the point of the V-shape and its contact zone with said column.

5. A sensor according to anyone of claims 1 to 4, characterized in that each of the connection members (13) extends sideways by means of a curved lug (15) enabling a reference resistance (16) to be fixed thereto so as to be connected in parallel with the heat sensitive resistive wire (6).

6. A sensor according to anyone of claims 1 to 5, characterized in that the housing is built up from two half-shells, and wherein the column (17) projects from one (1) of the half-shells with the free end of said column being received in a corresponding recess in the other half-shell (1').

7. A sensor according to claim 6, characterized in that the column (17) has a shoulder (19) against which the corresponding end branch of the resilient fastening member (11) is maintained by the wall of the housing adjacent to the recess for said column.

8. A sensor according to anyone of claims 1 to 7, characterized in that the housing includes an internal recess for receiving a thermistor and located behind the column.

9. A sensor according to claim 8, characterized in that the wires for providing electrical connection to the heat sensitive resistive wire (6) and to the thermistor leave the housing from the top thereof.

## Patentansprüche

1. Pegelaufnehmer für elektrisch isolierende Flüssigkeit, enthaltend einen länglichen Behälter, der im wesentlichen vertikal in einem die Flüssigkeit enthaltenden Tank befestigt ist, mit einer oberen und einer unteren Öffnung und in dem in Längsrichtung ein thermoempfindlicher Widerstandsdraht in Form eines V angeordnet ist, dessen Enden, im oberen Abschnitt des Behälters gelegen, elektrisch mit einer Versorgungs- und Verarbeitungsschaltung verbunden sind, die ständig eine Pegelkontrolle der Flüssigkeit im Tank ermöglicht, wobei der Aufnehmer Einrichtungen zur Positionierung des thermoempfindlichen Drahtes (6) enthält, die einerseits einen im wesentlichen konstanten Abstand der zwei Zweige im größten Teil desselben und andererseits eine stabile Position der Ebene sicherstellen, die von dem Draht gegenüber dem länglichen Behälter definiert wird, welche Positioniereinrichtungen im oberen Abschnitt Querschlitze (12) enthalten, die ein Verbindungsorgan (13) aufnehmen, das jedem Zweig des thermoempfindlichen Drahtes zugeordnet ist und dessen mittlerer Abschnitt (14) die elektrische Verbindung des zugehörigen Endes des genannten Drahtes sicherstellt, und im unteren Abschnitt eine Quersäule (17) enthalten, die fest mit dem Behälter verbunden ist und die einerseits den gewünschten Abstand der zwei Zweige des Drahtes und andererseits die Abstützung eines elastischen Verankerungsorgans (11) der V-förmigen Spitze sicherstellt, die hinter der genannten Säule gegen die Unterseite des Behälters gelegen ist.

2. Aufnehmer nach Anspruch 1, dadurch gekennzeichnet, daß das elastische Verankerungsorgan (11) einen zentralen Zweig (23) aufweist, um den die Spitze des V verläuft, und zwei Endzweige (24, 25) aufweist, die jeweils in Nachbarschaft der Basis und des Endes der Säule (17) angeordnet sind.

3. Aufnehmer nach Anspruch 2, dadurch gekennzeichnet, daß ein Endzweig (25) des elastischen Verankerungsorgans von der Säule (17) benachbart dem Ende derselben durchquert wird, während der andere Endzweig (24) gegen die Basis der Säule zwischen zwei benachbarten Wänden (20) in Anlage gehalten wird, die hinter der genannten Säule vorgesehen sind.

4. Aufnehmer nach Anspruch 3, dadurch gekennzeichnet, daß der Rand (22) der hinter der Säule (17) vorgesehenen Wände als Abstützung für den Abschnitt des Drahtes dient, der zwischen der V-förmigen Spitze und der Berührungszone mit der genannten Säule liegt.

5. Aufnehmer nach einem der Ansprüche 1 bis 4, dadurch gekennzeichnet, daß jedes der Verbindungsorgane (13) sich quer durch eine gebogene Klaue (15) fortsetzt, die die Befestigung eines Eichwiderstandes (16) erlauben, der somit parallel zum thermoempfindlichen Widerstandsdraht (6) befestigt ist.

6. Aufnehmer nach einem der Ansprüche 1 bis 5, bei dem der Behälter aus zwei Halbschalen besteht, dadurch gekennzeichnet, daß die Säule (17) von einer der Halbschalen (1) vorsteht und daß das Ende der genannten Säule von einer Aufnahme entsprechend der anderen Halbschale (1') aufgenommen wird.

7. Aufnehmer nach Anspruch 6, dadurch gekennzeichnet, daß die Säule (17) eine Schulter (19) aufweist, an der der entsprechende Endzweig des elastischen Verankerungsorgans (11) durch die Wand des Behälters benachbart der Aufnahme der genannten Säule in Anlage gehalten wird.

8. Aufnehmer nach einem der Ansprüche 1 bis 7, dadurch gekennzeichnet, daß der Behälter hinter der Säule eine untere Aufnahme enthält, die einen Thermistor aufnehmen kann.

9. Aufnehmer nach Anspruch 8, dadurch gekennzeichnet, daß die elektrischen Verbindungsdrähte des thermoempfindlichen Widerstandsdrahtes (6) und des Thermistors den Behälter im oberen Abschnitt desselben verlassen.

## FIG_1

## FIG_2

EP 0 209 458 B1

FIG.3

18

IV

21 20

V

1

FIG.4

18
19
20 22 17
1

FIG.5

18 19
22 17
22
1

FIG.8

11 25
26
27

FIG.9

25
23
24
11
26

FIG.6

8 15
7 15
6
13 14
13 14

FIG.7

13
13
6
8 15
7 15

2